# EUROPEAN PATENT APPLICATION

(11) **EP 3 965 011 A1**
(43) Date of publication of application: **09.03.2022**
(21) Application number: 21194671.0
(22) Date of filing: 02.09.2021
(51) Int. Cl.: G06K 19/07, G06Q 50/00, G06D 3/00

(54) **SYSTEM, APPARATUS AND METHODS FOR DETERMINATION OF TRIGGER EVENTS USING RADIO-FREQUENCY IDENTIFICATION DEVICES**

(30) Priority: 03.09.2020 US 202063074393 P; 01.09.2021 US 202117463799
(71) Applicant: Taoglas Group Holdings Limited, Enniscorthy Y21 XW56 Wexford (IE)
(72) Inventor: BEHAN, Peter, San Diego, CA 92121 (US); HIBBETT, Mike, San Diego, CA 92121 (US)
(74) Representative: Rooney, John-Paul

(57) **Abstract**

Systems and apparatus for the determination of trigger events using radio-frequency identification devices. In one embodiment, the system includes radio-frequency devices, one or more wireless access points, and monitoring software. The system operates by detecting a trigger event by a radio-frequency identification device; switching from a default identifier to an alert identifier for the radio-frequency identification device; determining whether to transmit the alert identifier for the radio-frequency identification device; and transmitting the alert identifier for the radio-frequency identification device to a wireless access point. Methods for determination of trigger events using radio-frequency identification devices are also disclosed.

## Description

### Priority

This application claims the benefit of priority to U.S. Patent Application Serial No. 17/463,799 filed on September 1, 2021, of the same title, which claims the benefit of priority to U.S. Provisional Application Serial No. 63/074,393 filed on September 3, 2020, entitled "System and Apparatus for Determination of Trigger Events using Radio-Frequency Identification Devices", the contents of each of the foregoing being incorporated herein by reference in its entirety.

### Copyright

A portion of the disclosure of this patent document contains material that is subject to copyright protection. The copyright owner has no objection to the facsimile reproduction by anyone of the patent document or the patent disclosure, as it appears in the Patent and Trademark Office patent files or records, but otherwise reserves all copyright rights whatsoever.

### Background of the Disclosure

### 1. Technological Field

The present disclosure relates generally to the determination of trigger events, and more particularly in one exemplary aspect to systems and apparatus that utilize existing infrastructure in combination with software and low-power radio-frequency identification devices to facilitate the determination of trigger events.

### 2. Description of Related Technology

So-called radio-frequency identification (RFID) technology uses electromagnetic energy to identify and track so-called RFID tags that are attached to objects of interest. An RFID system consists of one or more RFID readers and one or more RFID tags. Typically, when an RFID tag is interrogated by an electromagnetic interrogation pulse emitted from a nearby RFID reader, the RFID tag transmits digital data which often includes identifying information for the RFID tag. RFID systems typically come in one of three main types of RFID systems. The first type of RFID systems is known as an active reader/passive tag RFID system in which RFID tags are powered by the energy received from the RFID reader's interrogating radio waves. These RFID systems are desirable in that they avoid the need for separate power sources for the RFID tags themselves. However, due to the nature of these passive RFID systems, they are typically limited by the ranges in which they operate. The second main type of RFID system is known as an active reader/active tag RFID system. These RFID systems are typically powered by power sources (e.g., batteries) located within the RFID tags themselves. The third main type of RFID system is known as a passive reader active tag RFID system. Again, these RFID systems are again powered by power sources located within the RFID tags themselves.

However, despite the variety and ubiquitous nature of these RFID systems, these RFID systems can suffer from competing design constraints. For example, the RFID paradigm distinguishes between RFID readers and RFID tags, thereby creating a system in which one device must be classified as either: (1) a reader; or (2) a tag, but not both. Additionally, many of these RFID systems can accommodate additional range where desired, but power consumption is increased because of the additional range provided by the RFID system, which itself may be undesirable. Hence, there is a salient need for RFID systems that address these and other deficiencies in the prior art.

### Summary

The present disclosure satisfies the aforementioned needs by providing for an RFID system, and components of the RFID system, that address the deficiencies of the prior art, as well as methods of using the same.

In one aspect, a method for determining trigger events using radio-frequency identification devices is disclosed. In one embodiment, the method includes detecting a trigger event by a radio-frequency identification device; switching from a default identifier to an alert identifier for the radio-frequency identification device upon the detecting of the trigger event; and transmitting the alert identifier for the radio-frequency identification device to a wireless access point.

Optionally, the transmitting of the alert identifier for the radio-frequency identification device to the wireless access point occurs without establishing a bi-directional communication link between the radio-frequency identification device and the wireless access point.

Optionally, the detecting of the trigger event by the radio-frequency identification device uses a first wireless communication protocol; and the transmitting of the alert identifier for the radio-frequency identification device uses a second wireless communication protocol that differs from the first wireless communication protocol.

Optionally, the detecting of the trigger event includes determining a proximity of distance to a second radio-frequency identification device to be within a pre-defined range of distance.

Optionally, the detecting of the trigger event further includes determining a presence of motion for the radio-frequency identification device.

Optionally, upon the determining of the proximity of distance to the second radio-frequency identification device to be within the pre-defined range of distance, producing an acoustic alert and/or emitting a visual indication.

In another aspect, a system for determining trigger events using radio-frequency identification devices is disclosed. In one embodiment, the system includes a first radio-frequency identification device; a second radio-frequency identification device; and monitoring software in communication with a wireless access point. The system is configured to: detect a trigger event by the first radio-frequency identification device; switch from a default identifier to an alert identifier for the first radio-frequency identification device upon the detection of the trigger event; transmit, by the first radio-frequency identification device, the alert identifier for the first radio-frequency identification device to the wireless access point; and receive, by the monitoring software, the alert identifier from the wireless access point.

Optionally, the transmission of the alert identifier by the first radio-frequency identification device to the wireless access point occurs without establishment of a bi-directional communication link between the first radio-frequency identification device and the wireless access point.

Optionally, the detection of the trigger event by the first radio-frequency identification device uses a first wireless communication protocol; and the transmission of the alert identifier by the first radio-frequency identification device uses a second wireless communication protocol that differs from the first wireless communication protocol.

Optionally, the detection of the trigger event by the first radio-frequency identification device includes determination of a proximity of distance to the second radio-frequency identification device within a pre-defined range of distance.

Optionally, the detection of the trigger event by the first radio-frequency identification device further includes determination of a presence of motion for the first radio-frequency identification device.

Optionally, upon the determination of the proximity of distance to the second radio-frequency identification device to be within the pre-defined range of distance, the first radio-frequency identification device emits an acoustic alert and/or emits a visual indication.

Optionally, the monitoring software, in response to receipt of the alert identifier from the wireless access point, is further configured to transmit notification of the detected trigger event to a notification device.

Optionally, the detection of the trigger event by the first radio-frequency identification device comprises determination by the first radio-frequency identification device of an acceleration event for the first radio-frequency identification device.

In yet another aspect, a radio-frequency identification device for communicating determined trigger events is disclosed. In one embodiment, the radio-frequency identification device includes: a transceiver capable of communicating data using a first communication protocol; a transmitter capable of transmitting identification data using a second communication protocol, the second communication differing from the first communication protocol; a controller that facilitates communication with the transceiver and the transmitter; and memory, the memory storing a default identifier and an alert identifier. The radio-frequency identification device is further configured to: detect a trigger event using the transceiver; switch from the default identifier to the alert identifier upon the detection of the trigger event by the transceiver; and transmit, from the transmitter, the alert identifier to a wireless access point.

Optionally, the detection of the trigger event using the transceiver includes determination of a proximity of distance, within a pre-defined range of distance, to a second radio-frequency identification device.

Optionally, the determination of the proximity of distance is based on receipt, by the transceiver, of received signal strength indicator (RSSI) beacons from the second radio-frequency identification device.

Optionally, the determination of the proximity of distance is based on Time-of-Flight (ToF) calculations by the radio-frequency identification device using information received from the second radio-frequency identification device.

Optionally, the radio-frequency identification device further includes an accelerometer, and the detection of the trigger event further includes determining a presence of motion for the radio-frequency identification device using the accelerometer.

Optionally, the radio-frequency identification device further includes a speaker and/or a light-emitting diode, and wherein upon the determination of the proximity of distance to the second radio-frequency identification device to be within the pre-defined range of distance, the radio-frequency identification device produces an acoustic alert using the speaker and/or emits a visual indication using the light-emitting diode.

In yet another aspect, a non-transitory computer-readable storage apparatus is disclosed. In one embodiment, the non-transitory computer-readable storage apparatus includes a plurality of instructions, that when executed by a processor apparatus, are configured to: detect a trigger event using a transceiver; switch from the default identifier to the alert identifier upon the detection of the trigger event by the transceiver; and transmit, from a transmitter, the alert identifier to a wireless access point.

Other features and advantages of the present disclosure will immediately be recognized by persons of ordinary skill in the art with reference to the attached drawings and detailed description of exemplary implementations as given below.

### Brief Description of the Drawings

The features, objectives, and advantages of the present disclosure will become more apparent from the detailed description set forth below when taken in conjunction with the drawings, wherein:
FIG. 1 is a functional block diagram of an exemplary system for the determination of trigger events, in accordance with the principles of the present disclosure.
FIG. 2 is a functional block diagram of an exemplary radio-frequency identification device, in accordance with the principles of the present disclosure.
FIG. 3 is a functional block diagram of an exemplary methodology for the determination and communication of trigger events, in accordance with the principles of the present disclosure.

### All Figures disclosed herein are ^{©} Copyright 2020 - 2021

### Taoglas Group Holdings Limited. All rights reserved.

### Detailed Description

### Exemplary Embodiments

Detailed descriptions of the various embodiments and variants of the apparatus and methods of the present disclosure are now provided. It is noted that wherever practicable similar or like reference numbers may be used in the figures and may indicate similar or like functionality. The figures depict embodiments of systems, radio-frequency identification devices, or methods for purposes of illustration only. One skilled in the art will readily recognize from the following description that alternative embodiments of the structures and methods illustrated herein may be employed without necessarily departing from the principles described herein.

### Exemplary System(s) -

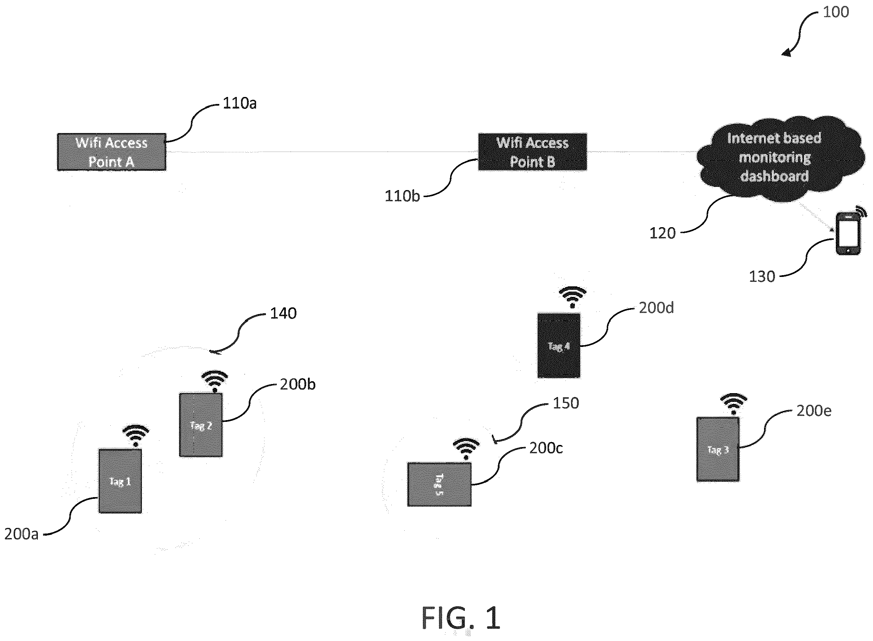

Referring now to FIG. 1, an exemplary system 100 for the determination of trigger events is shown and described in detail. As used herein, the term "trigger event" or "trigger events" encompasses behaviors that the operators of system 100 are attempting to mitigate and/or track. For example, in the context of local or global health emergencies (e.g., the Covid-19 pandemic), the system 100 may be employed to enforce social distancing guidelines while facilitating the ability to implement contact tracing protocols. The system 100 may also be employed to mitigate close contact between employees and potentially dangerous equipment, as well as to provide notifications of these potentially dangerous events to facilitate employee education and training protocols. For example, a manufacturing facility may desire to prevent untrained employees from coming into close proximity with potentially unsafe manufacturing equipment. Accordingly, the system 100 provides a valuable tool which enables employers to monitor and verify whether employees have the requisite safety training for operating potentially hazardous equipment. The system 100 may also be employed to determine instances where an individual may be experiencing a health emergency (e.g., a heart attack or stroke) or an accident (e.g., a trip and fall) in order to provide faster response times for individuals that might require assistance. More generally, the system 100 enables the ability for the operator of the system 100 to determine and track trigger events.

In some implementations, the system 100 may include one or more wireless access points 110 (e.g., Wi-Fi access point A 110a and Wi-Fi access point B 110b as illustrated in FIG. 1) as well as monitoring software 120. The monitoring software 120 may be resident within a cloud-based service and may be in communication with the various wireless access points 110 as well as in communication with various notification devices 130. For example, the monitoring software 120 may include the Taoglas^{®} CROWD Insights^{™} platform manufactured by the assignee of the present application. The notification devices 130 may include various computing devices such as, for example, desktop computers, laptop computers, tablets, smartphones, and the like. In some implementations, the monitoring software 120 may be resident in a physical location such as, for example, a computer server that is resident within the premises of the operator of the system 100. The monitoring software 120 may receive communications from individual ones of the wireless access points 110 and may transmit notifications to the notification devices 130. In some implementations, these transmitted notifications include notification of various trigger events received by the wireless access points 110 and communicated with the monitoring software 120. For example, a trigger event may be communicated by a radio-frequency identification device 200 and received by a wireless access point 110. The monitoring software 120 may detect the wireless access point's 110 receipt of the trigger event and may transmit notification of this received trigger event to a notification device 130.

The radio-frequency identification devices 200 may be in communication range with one or more of the wireless access points 110 illustrated in FIG. 1. For example, radio-frequency identification devices 200a, 200b may be in communication range with wireless access point 110a, while radio-frequency identification devices 200c, 200d, 200e may be in communication range with wireless access point 110b. These radio-frequency identification devices 200 may also be worn (e.g., on a lanyard) or otherwise carried by the employees at a place of business, while the wireless access points 110 may be present within the premises of the place of business. Accordingly, monitoring software 120 may therefore be aware of the number and approximate location for each of these radio-frequency devices 200. As but another non-limiting example, individual ones of the radio-frequency identification devices 200 may be placed on equipment located within the premises of the place of business in addition to being worn or carried by various employees. The radio-frequency identification devices 200 may be enabled to detect trigger events. For example, in scenario 140, radio-frequency identification device 200a may determine that it is within a predetermined proximity (e.g., within two meters) of radio-frequency identification device 200b. Accordingly, by having these two radio-frequency identification devices 200a and 200b within this predetermined proximity from one another, one or both of these radio-frequency identification devices 200 may store the occurrence of this trigger event within memory located within a given radio-frequency identification device 200.

This predetermined proximity may be determined using low power radio transceivers located within each of these radio-frequency identification devices 200. For example, these low power radio transmitters may include Bluetooth^{®} radios in some implementations. In the context of Bluetooth, each of these Bluetooth radios within a respective radio-frequency identification device may transmit broadcast beacons, while simultaneously listening for and receiving the broadcast beacons from other Bluetooth radio devices. For example, determination of close proximity between radio-frequency identification device 200a and radio-frequency identification device 200b may be determined based on the received signal strength indicator (RSSI) of the beacons received from the other Bluetooth radio. One advantage obtained through use of RSSI, is that this RSSI information may be determined with minimal impact to the power consumption for the radio-frequency identification device 200. However, RSSI information may be strongly affected by the antenna radiation patterns of the Bluetooth radios. For example, differences in radiation pattern between devices may affect the RSSI values received. Accordingly, it may be advantageous in some implementations if each of the radio-frequency identification devices 200 share a common (or known) radiation pattern with one another. Moreover, the environment in which the radio-frequency identification devices 200 operate may also affect these determined RSSI values. For example, reflections off walls, furniture, equipment, and the like within a given location may affect the RSSI values that are received. Accordingly, in some implementations it may be desirable to pre-train the radio-frequency identification devices 200 to identify various RSSI values within a given location in order to determine the occurrence of a trigger event.

Determination of close proximity between devices 200 may also be determined through use of so-called Time-of-Flight (ToF) calculations by the radio-frequency identification devices 200 in addition to, or alternatively from, the use of the aforementioned RSSI information. As a brief aside, ToF calculations may be determined since radio signals always propagate at a known speed (i.e., the speed of light). Accordingly, the traveled distance may be calculated by determining the travel time between devices 200. However, determination of shorter distances may be made more difficult than longer distances if, for instance, the clocking speed of the radio-frequency identification devices 200 is not at a high enough clocking rate, or if the clocks of one device 200 drifts with respect to the clock of another device 200. Accordingly, in some implementations, the radio-frequency identification devices 200 may employ clock synchronization techniques to manage the accuracy of these ToF calculations.

In some implementations, one-sided close proximity determinations may be made. For example, individual ones of the radio-frequency identification devices 200 may include internal accelerometers in some implementations. These accelerometers may be utilized to determine the party that initiated the close proximity determination. For example, and referring again to scenario 140, radio-frequency identification device 200a may be determined to have been moving when the close proximity determination was made, while radio-frequency identification device 200b may be determined to have been static (e.g., sitting at a desk as but one non-limiting example). Accordingly, in some implementations, the trigger event will identify that the user associated with radio-frequency identification device 200a was at fault for the determined trigger event. As but another non-limiting example, radio-frequency identification device 200a may be associated with an employee, while radio-frequency identification device 200b may be associated with equipment. Accordingly, upon determination of a trigger event (e.g., an employee getting too close to equipment in which the employee has not been certified to operate), the monitoring software 120 may flag the trigger event as being caused by the employee.

In some implementations, the radio-frequency identification devices 200 may include a sensory and/or a visual indicator which may be activated by a determined trigger event. For example, if radio-frequency identification device 200a determines that it is in too close of proximity with radio-frequency identification device 200b (e.g., within two meters (2m)), one or both of the radio-frequency identification devices 200a, 200b may issue an audible noise, vibrate and/or trigger a visual indication. In such an instance, the use of an audible noise, vibration and/or a visual indicator may provide near-immediate feedback to the wearers of the radio-frequency identification devices 200 that they have gotten to close to one another, or in the context where one of the radio-frequency identification devices 200b is associated with equipment, that a user of radio-frequency identification device 200a has gotten to close to the equipment associated with the radio-frequency identification device 200b.

In some implementations, once a radio-frequency identification device 200 has determined that a trigger event has occurred, the radio-frequency identification device 200 may access internal memory and switch its default identifier with an alert identifier, with both identifiers being associated with a given radio-frequency identification device 200. For example, its default identifier may be, for instance, a media access control (MAC) address, while its alert identifier may be a different alert MAC address. The radio-frequency identification device 200 may switch between its default MAC address and its alert MAC address upon determination of a trigger event. The radio-frequency identification device 200 may include a wireless network transceiver to transmit its default identifier or to transmit its alert identifier. For example, its wireless network transceiver may include Wi-Fi circuitry that transmits data via a wireless network protocol that is based on the IEEE 802.11 family of standards. In some implementations, the wireless network transceiver may be obviated in favor of a wireless transmitter to, *inter alia,* conserve power. In other words, bi-directional communication is not always necessary for the radio-frequency identification device 200 as it is not a requirement that a wireless connection be established, rather the radio-frequency identification device 200 only needs to communicate with a wireless access point 110 in order to communicate either its default MAC address or to communicate its alert MAC address.

As a brief aside, the traditional communication of a MAC address forms part of the connection protocol in a wireless network local area network (WLAN) between a device and a wireless access point 110. In other words, traditional Wi-Fi transceivers perform periodic passive scans for wireless access points 110. These periodic passive scans allow the wireless access point 110 to determine the number of WLAN devices that are in communication range with the wireless access point 110. Upon completion of this connection protocol, the device will become registered with the wireless access point 110 and bi-directional communications may proceed. However, implementations of the disclosed system 100 do not necessarily need to complete the connection protocol for the system 100 to function as intended. Rather, the wireless access points 110 need only receive either the default MAC address or the alert MAC address for a given radio-frequency identification device 200.

Upon receipt of an alert MAC address, the wireless access point 110 may communicate this received alert MAC address to the monitoring software 120. The monitoring software 120 may include a stored table within memory that correlates the received alert MAC address with a given radio-frequency identification device 200. The monitoring software 120 may also associate a given alert MAC address with a given wireless access point 110 to facilitate the identification of the area where the trigger event occurred. The monitoring software 120 may then alert appropriate personnel through communications with one or more notification devices 130. By disabling (or obviating) much of the wireless transceiver circuitry present within the radio-frequency identification device 200 such that the radio-frequency identification device 200 only needs to communicate its default MAC address or alert MAC address, power consumed by the radio-frequency identification device 200 may be conserved. Accordingly, the combination of the radio-frequency identification device 200 with its combination of low power radio transceivers for trigger event determination and longer-range wireless transmitters, enable the system 100 to identify and track trigger events.

### Exemplary Radio-Frequency Identification Devices -

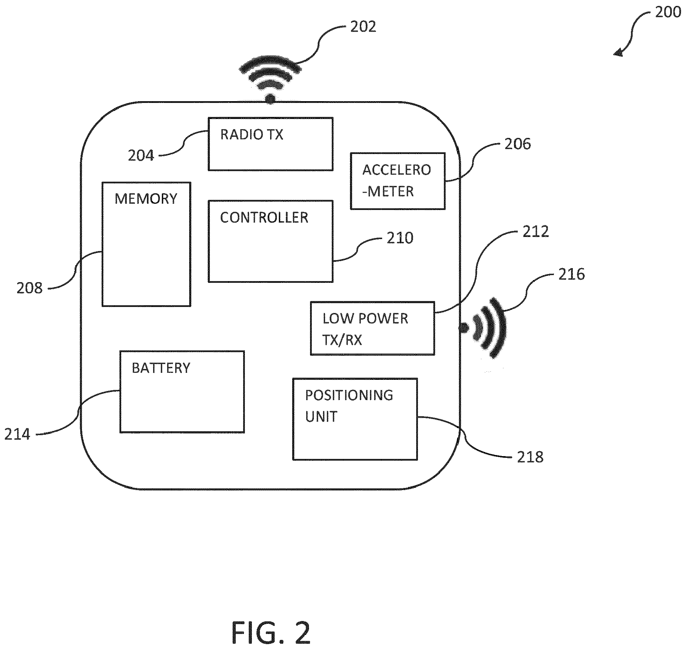

Referring now to FIG. 2, one exemplary radio-frequency identification device 200 is shown and described in detail. As discussed elsewhere herein, the radio-frequency identification device 200 may be relatively small so that it can be conveniently worn on an individual. The radio-frequency identification device 200 may include a low power transceiver 212 (e.g., Bluetooth circuitry) along with an associated low power transceiver antenna 216. The radio-frequency identification device 200 may also include a higher-power radio transmitter 204 which is configured to transmit, for example, the aforementioned default MAC address and alert MAC address via its associated antenna 202. The radio-frequency identification device 200 may also include a controller 210 which facilitates communication between the low power transceiver 212 and the higher-power radio transmitter 204. In some implementations, the controller 210 may not be a discrete integrated circuit and instead may be integrated as a portion of the low power transceiver 212 integrated circuitry and/or the higher-power radio transmitter 204.

The radio-frequency identification device 200 may include internal memory 208. In some implementations, the memory 208 consists of non-volatile memory 208 reducing battery 214 consumption as compared with a volatile memory implementation as, for example, the non-volatile memory 208 obviates the need for refresh circuitry. The memory 208 may store the default MAC address as well as the alert MAC address for the radio-frequency identification device 200. The memory 208 may also store positioning information from the positioning unit 218. For example, upon determination of a trigger event by the low power transceiver 212, positioning information from the positioning unit 218 may be stored in memory 208 so that the location of where the trigger event occurred may be stored in memory 208. Additionally, one or more clocks may be employed within the radio-frequency identification device 200. For example, the low power transceiver 212, the higher-power radio transmitter 204, the positioning unit 218 and/or the controller 210 may include a clock. One or more of these clocks may be utilized to record the time of when trigger events have occurred (i.e., timestamp the trigger event). The timing of these trigger events may also be stored in memory 208.

The radio-frequency identification device 200 may also include an accelerometer 206. The accelerometer 206 may be used for a variety of purposes. For example, the accelerometer 206 may enable the higher-power radio transmitter 204 when the radio-frequency identification device 200 is in motion and may disable the higher-power radio transmitter 204 when the radio-frequency identification device 200 is not in motion. Such an implementation may be desirable to conserve power within the battery 214. In some implementations, a timer is utilized in conjunction with the accelerometer 206 so that the higher-power radio transmitter 204 is not immediately powered down when the accelerometer 206 detects a lack of motion. For example, the timer may notify the higher-power radio transmitter 204 to shut down after a set period of time of inactivity (e.g., several minutes). Upon motion being detected, the accelerometer 206 may notify the controller 210 and/or the higher-power radio transmitter 204 to resume transmission of its MAC address (whether default or alert). The accelerometer 206 may itself determine trigger events without necessarily requiring that the trigger event be determined through use of the low power transceiver 212. For example, data from the accelerometer 206 may be indicative of a fall for the wearer of the radio-frequency identification device 200.

The functionality of the various components described herein with respect to the radio-frequency identification device 200 may be implemented through the use of software executed by one or more processors (or controllers) and/or may be executed via the use of one or more dedicated hardware modules, with the architecture of the system being specifically optimized to execute the trigger event determinations discussed herein. The computer code (or software) disclosed herein is intended to be executed by one or more processors (or controllers) that is able to read instructions from a non-transitory computer-readable medium (e.g., memory 208) and execute them in the one or more processors (or controllers), whether off-the-shelf or custom manufactured. The one or more processors (or controllers) may include, for example, a central processing unit (CPU), a graphics processing unit (GPU), a digital signal processor (DSP), a controller, a state machine, one or more application specific integrated circuits (ASICs), one or more radio-frequency integrated circuits (RFICs), or any combination of the foregoing.

The memory may include a non-transitory computer-readable medium on which is stored instructions (e.g., software) embodying any one or more of the methodologies or functions described herein. The instructions may also reside, completely or at least partially, within the processor or controller (e.g., within a processor's cache memory) during execution, the memory and the processor(s) or controller(s) also constituting non-transitory computer-readable media. These instructions may be transmitted or received over a network via, for example, a network interface device. While non-transitory computer-readable medium is shown in an example embodiment to be a single medium, the term "non-transitory computer-readable medium" should be taken to include a single medium or multiple media (e.g., whether centralized or distributed) able to store the instructions. The term "non-transitory computer-readable medium" shall also be taken to include any medium that is capable of storing instructions for execution by the one or more processors (or controllers) and that cause the radio-frequency identification device 200 to perform, for example, one or more of the methodologies disclosed herein.

### Exemplary Trigger Event Determination Methodologies -

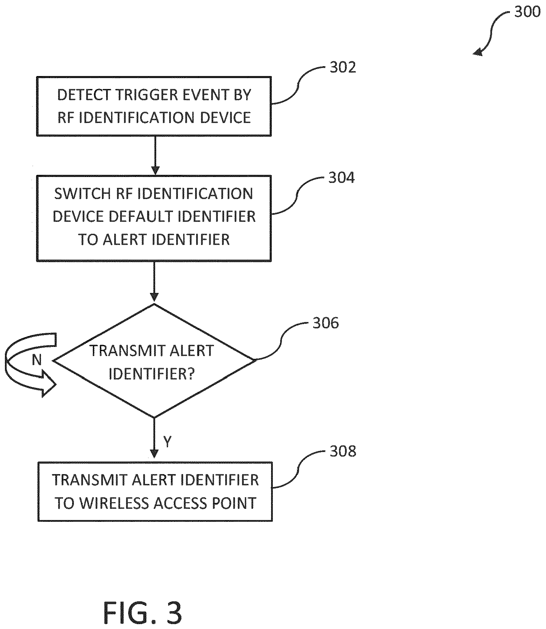

Referring now to FIG. 3, one exemplary methodology 300 for the determination and communication of trigger events is shown and described in detail. At operation 302, a radio-frequency identification device detects that a trigger event has occurred. In some implementations, the trigger event is detected via use of a low power radio transceiver that determines that the radio-frequency identification device is within a predetermined proximity to another radio-frequency identification device. In some instances, the predetermined proximity must be detected for longer than a set amount of time. In other words, short periods of close proximity may not warrant that a trigger event be detected, while longer periods of close proximity may warrant that a trigger event be detected. In some implementations, both radio-frequency identification devices are worn or carried by a person and the trigger event is detected when the two persons coming within a predetermined proximity to one another. As but another non-limiting example, one of the radio-frequency identification devices is worn or carried by a person, while the other radio-frequency identification device is placed on a piece of equipment or positioned adjacent to a restricted or hazardous area. Accordingly, when the radio-frequency identification device being worn or carried by a person comes within a predetermined proximity to the restricted or hazardous area, a trigger event is detected. The trigger event may also be detected via use of an internal accelerometer. For example, if the user associated with the radio-frequency identification device does not move for a predetermined amount of time, the trigger event may be detected as the lack of movement could be indicative of, for example, that the user has become unconscious. As but another non-limiting example, the accelerometer may experience movement beyond a threshold level. In this instance, the trigger event may be indicative of the user experiencing a fall.

At operation 304, upon detection of the trigger event, the radio-frequency identification device switches from its default identifier to an alert identifier. For example, the default identifier may include a default MAC address, while the alert identifier may include an alert MAC address. In some implementations, an internal accelerometer may be used in combination with the detected trigger event to implement so-called "at-fault" switching between the default identifier and the alert identifier. For example, if the radio-frequency identification devices are both associated with an individual, the switching between the default identifier and the alert identifier will only occur if movement is detected for the radio-frequency identification device. For example, one party may be stationary while the other party has detected movement, in that instance only the radio-frequency identification device associated with the moving party will switch identification from the default identifier to the alert identifier. If however, both parties have detected movement during the trigger event, both radio-frequency identification devices will switch identification from the default identifier to the alert identifier.

At operation 306, upon the switch from the default identifier to the alert identifier, the radio-frequency identification device will determine whether it should transmit its alert identifier from its higher-power radio transmitter (or transceiver). For example, in some implementations, the radio-frequency identification device always transmits its alert identifier immediately upon switching from the default identifier to the alert identifier. As but another non-limiting example, the alert identifier is only transmitted at pre-set times to reduce battery consumption. For example, the radio-frequency identification device may only transmit alert identifiers at pre-scheduled times during the day. Such an implementation may be advantageous where the trigger event is not considered time critical. For example, the sensory or visual indicator may be sufficient to remedy the undesirable behavior, while the transmission of the alert identifier at a later time may conserve power while enabling corrective actions to be taken at a later point in time. In some implementations, the decision over whether to transmit an alert identifier may be based off of other considerations such as proximity to a wireless access point, or based off of the mode of communication that the wireless access point is currently operating in. Such an implementation may be advantageous to reduce power consumption for the radio-frequency identification device. Upon determination that the alert identifier should be transmitted, the radio-frequency identification device transmits its alert identifier to a wireless access point at operation 308.

It will be recognized that while certain aspects of the present disclosure are described in terms of specific design examples, these descriptions are only illustrative of the broader methods of the disclosure and may be modified as required by the particular design. Certain steps may be rendered unnecessary or optional under certain circumstances. Additionally, certain steps or functionality may be added to the disclosed embodiments, or the order of performance of two or more steps permuted. All such variations are considered to be encompassed within the present disclosure described and claimed herein.

While the above detailed description has shown, described, and pointed out novel features of the present disclosure as applied to various embodiments, it will be understood that various omissions, substitutions, and changes in the form and details of the device or process illustrated may be made by those skilled in the art without departing from the principles of the present disclosure. The foregoing description is of the best mode presently contemplated of carrying out the present disclosure. This description is in no way meant to be limiting, but rather should be taken as illustrative of the general principles of the present disclosure. The scope of the present disclosure should be determined with reference to the claims.

## Claims

1. A method for determining trigger events using radio-frequency identification devices (200), comprising:
detecting a trigger event by a radio-frequency identification device (200);
switching from a default identifier to an alert identifier for the radio-frequency identification device (200) upon the detecting of the trigger event; and
transmitting the alert identifier for the radio-frequency identification device (200) to a wireless access point (110).

2. The method of Claim 1, wherein the transmitting of the alert identifier for the radio-frequency identification device (200) to the wireless access point (110) occurs without establishing a bi-directional communication link between the radio-frequency identification device(200) and the wireless access point (110).

3. The method of either of Claims 1 or 2, wherein the detecting of the trigger event by the radio-frequency identification device (200) comprises using a first wireless communication protocol; and
the transmitting of the alert identifier for the radio-frequency identification device (200) comprises using a second wireless communication protocol, the second wireless communication protocol differing from the first wireless communication protocol.

4. The method of any preceding Claim, wherein the detecting of the trigger event comprises determining a proximity of distance to a second radio-frequency identification device (200) to be within a pre-defined range of distance.

5. The method of Claim 4, wherein upon the determining of the proximity of distance to the second radio-frequency identification device (200) to be within the pre-defined range of distance, producing an acoustic alert and/or emitting a visual indication.

6. The method of any preceding Claim, wherein the detecting of the trigger event further comprises determining a presence of motion for the radio-frequency identification device (200).

7. A system (100) for determining trigger events using radio-frequency identification devices (200), the system comprising:
a first radio-frequency identification device (200);
a second radio-frequency identification device (200); and
monitoring software (120) in communication with a wireless access point (110);
wherein the system (100) is configured to:
detect a trigger event by the first radio-frequency identification device (200);
switch from a default identifier to an alert identifier for the first radio-frequency identification device (200) upon the detection of the trigger event;
transmit, by the first radio-frequency identification device (200), the alert identifier for the first radio-frequency identification device (200) to the wireless access point (110); and
receive, by the monitoring software 120), the alert identifier from the wireless access point (110).

8. The system (100) of Claim 7, wherein the transmission of the alert identifier by the first radio-frequency identification device (200) to the wireless access point (110) occurs without establishment of a bi-directional communication link between the first radio-frequency identification device (200) and the wireless access point (110).

9. The system (100) of Claim 8, wherein the detection of the trigger event by the first radio-frequency identification device (200) through use of a first wireless communication protocol; and
the transmission of the alert identifier by the first radio-frequency identification device (200) through use of a second wireless communication protocol, the second wireless communication protocol differing from the first wireless communication protocol.

10. The system (100) of any of Claims 7 to 9, wherein the detection of the trigger event by the first radio-frequency identification device (200) comprises determination of a proximity of distance to the second radio-frequency identification device (200) within a pre-defined range of distance.

11. The system (100) of Claim 10, wherein upon the determination of the proximity of distance to the second radio-frequency identification device to be within the pre-defined range of distance, the first radio-frequency identification device (200) emits an acoustic alert and/or emits a visual indication.

12. The system (100) of any of Claims 7 to 11, wherein the monitoring software (120), in response to receipt of the alert identifier from the wireless access point (110), is further configured to transmit notification of the detected trigger event to a notification device (130).

13. A radio-frequency identification device (200) for communicating determined trigger events, the radio-frequency identification device (200) comprising:
a transceiver (212) capable of communicating data using a first communication protocol;
a transmitter (204) capable of transmitting identification data using a second communication protocol, the second communication protocol differing from the first communication protocol;
a controller (210) that facilitates communication with the transceiver (212) and the transmitter (204); and
memory (208), the memory (208) storing a default identifier and an alert identifier;
wherein the radio-frequency identification device (200) is configured to:
detect a trigger event using the transceiver (212);
switch from the default identifier to the alert identifier upon the detection of the trigger event by the transceiver (212); and
transmit, from the transmitter (204), the alert identifier to a wireless access point (110).

14. The radio-frequency identification device (200) of Claim 13, wherein the detection of the trigger event using the transceiver (212) comprises determination of a proximity of distance, within a pre-defined range of distance, to a second radio-frequency identification device (200).

15. The radio-frequency identification device (200) of either of Claims 13 or 14, wherein the radio-frequency identification device (200) further comprises an accelerometer (206) and the detection of the trigger event further comprises determining a presence of motion for the radio-frequency identification device (200) using the accelerometer (206).
